# EUROPEAN PATENT APPLICATION

(11) **EP 4 068 780 A1**
(43) Date of publication of application: **05.10.2022**
(21) Application number: 20896949.3
(22) Date of filing: 02.12.2020
(51) Int. Cl.: H04N 19/30, H04N 13/00

(54) **METHOD FOR REALIZING 3D IMAGE DISPLAY, AND 3D DISPLAY DEVICE**

(30) Priority: 05.12.2019 CN 201911231156
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133317
(87) International publication number: WO 2021/110026

(57) **Abstract**

The present application relates to a 3D display technology, and discloses a method for realizing 3D image display, comprising: detecting a posture change of a 3D display device; and adjusting a displayed image to a display dimension different from a display dimension before the posture of the 3D display device changes when detecting that a posture of the 3D display device changes, and adjusting a display orientation of the displayed image, so that the display orientation of the displayed image is kept in an initial display orientation before the posture change of the 3D display device. The present disclosure solves a problem that an electronic device cannot display a suitable picture after posture adjustment. The present application further discloses the 3D display device, a computer-readable storage medium, and a computer program product.

## Description

The present application claims priority to the Chinese Patent Application with an application number of 201911231156X and a title of *"Method for Realizing 3D Image Display, and 3D Display Device",* filed to China National Intellectual Property Administration on December 5th, 2019, the disclosures of which are hereby incorporated by reference.

### TECHNICAL FIELD

The present application relates to the technical field of 3D display, and for example, relates to a method for realizing 3D image display, and a 3D display device.

### BACKGROUND

At present, 3D display devices refract pixels through gratings to achieve a 3D display effect.

In the process of implementing embodiments of the present disclosure, at least the following problems are found in the related technologies: a display device is configured to display a suitable 3D effect in one posture, but does not have the function of displaying a suitable picture in another posture.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a method for realizing 3D image display, a 3D display device, a computer-readable storage medium, and a computer program product, to solve a technical problem that an electronic device cannot display a suitable picture after posture adjustment.

In some embodiments, a method for realizing 3D image display is provided, comprising: detecting a posture change of a 3D display device; and adjusting a displayed image to a display dimension different from a display dimension before the posture of the 3D display device changes when detecting that a posture of the 3D display device changes, and adjusting a display orientation of the displayed image, so that the display orientation of the displayed image is kept in an initial display orientation before the posture change of the 3D display device.

In some embodiments, detecting a posture change of a 3D display device comprises: detecting a rotational angular velocity of the 3D display device, and determining the posture change of the 3D display device according to the rotational angular velocity; and adjusting a display orientation of the displayed image comprises: rotating the display orientation of an image in a plane in which a displayed image is located, so that the image is kept in an initial display orientation before the posture change of the 3D display device.

In some embodiments, the posture of the 3D display device comprises at least one of: a transverse screen display posture, a vertical screen display posture, and an oblique screen display posture.

In some embodiments, a first posture of the 3D display device before the posture change comprises: any one of the transverse screen display posture, the vertical screen display posture, and the oblique screen display posture; a second posture of the 3D display device after the posture change comprises: any one, different from the first posture, of the transverse screen display posture, the vertical screen display posture, and the oblique screen display posture; and adjusting a display orientation of the displayed image comprises: rotating the image so that the image is kept in an initial display orientation corresponding to the first posture.

In some embodiments, when any one of the first posture and the second posture is the oblique screen display posture, adjusting a display orientation of the displayed image further comprises: displaying the image in a full screen display mode.

In some embodiments, adjusting a display orientation of the displayed image comprises: rotating the display orientation of the image in a plane in which the image is located, so that the image is kept within an initial display orientation range, wherein the initial display orientation range comprises the initial display orientation.

In some embodiments, the method for realizing 3D image display further comprises: adjusting the display orientation of the displayed image according to a viewing orientation of a user, so that the display orientation of the image coincides with the viewing orientation of the user.

In some embodiments, the viewing orientation of the user comprises: any one of a transverse viewing orientation, a vertical viewing orientation, and an oblique viewing orientation; and the method for realizing 3D image display further comprises: performing eye positioning for the user, and determining the viewing orientation of the user according to the obtained eye positioning data.

In some embodiments, adjusting the display orientation of the displayed image comprises: rendering subpixels in a multi-viewpoint 3D display screen of the 3D display device based on the adjusted display orientation of the image.

In some embodiments, adjusting a displayed image to a display dimension different from a display dimension before the posture of the 3D display device changes comprises adjusting the displayed image as a 3D image. In some embodiments, adjusting the displayed image as a 3D image comprises: rendering corresponding subpixels of a plurality of composite subpixels in the multi-viewpoint 3D display screen of the 3D display device according to a to-be-played 3D image, in response to the posture change of the 3D display device.

In some embodiments, adjusting a displayed image to a display dimension different from a display dimension before the posture of the 3D display device changes comprises adjusting the displayed image as a 2D image. In some embodiments, adjusting the displayed image as a 2D image comprises: rendering at least one subpixel of each composite subpixel in the multi-viewpoint 3D display screen of the 3D display device according to a to-be-played 2D image, in response to the posture change of the 3D display device.

In some embodiments, rendering at least one subpixel of each composite subpixel according to a to-be-played 2D image comprises: rendering the corresponding subpixels of each composite subpixel in the multi-viewpoint 3D display screen of the 3D display device according to the to-be-played 2D image, based on the eye positioning data.

In some embodiments, a 3D display device is provided, comprising: a processor; and a memory storing program instructions, wherein the processor is configured to execute the above method when executing the program instructions.

In some embodiments, a 3D display device is provided, comprising: a posture detection apparatus, configured to detect a posture change of the 3D display device; and a 3D processing apparatus, configured to adjust, based on the detected posture change of the 3D display device, a displayed image to a display dimension different from a display dimension before the posture of the 3D display device changes, and adjust a display orientation of the displayed image, so that the displayed image is kept in an initial display orientation before the posture change of the 3D display device.

In some embodiments, the posture detection apparatus is configured to detect a rotational angular velocity of the 3D display device, and determine the posture change of the 3D display device according to the rotational angular velocity; and the 3D processing apparatus is configured to rotate the display orientation of the image in a plane in which the displayed image is located, so that the image is kept in an initial display orientation before the posture change of the 3D display device.

In some embodiments, the posture of the 3D display device comprises at least one of: a transverse screen display posture, a vertical screen display posture, and an oblique screen display posture.

In some embodiments, a first posture of the 3D display device before the posture change comprises: any one of the transverse screen display posture, the vertical screen display posture, and the oblique screen display posture; a second posture of the 3D display device after the posture change comprises: any one, different from the first posture, of the transverse screen display posture, the vertical screen display posture, and the oblique screen display posture; and the 3D processing apparatus is configured to rotate the displayed image so that the image is kept in an initial display orientation corresponding to the first posture.

In some embodiments, the 3D processing apparatus is configured to, when any one of the first posture and the second posture is the oblique screen display posture, display the adjusted image in a full screen display mode.

In some embodiments, the 3D processing apparatus is configured to rotate the display orientation of the image in a plane in which the image is located, so that the image is kept within an initial display orientation range, wherein the initial display orientation range comprises the initial display orientation.

In some embodiments, the 3D processing apparatus is configured to adjust the display orientation of the displayed image according to a viewing orientation of a user, so that the display orientation of the image coincides with the viewing orientation of the user.

In some embodiments, the viewing orientation of the user comprises: any one of a transverse viewing orientation, a vertical viewing orientation, and an oblique viewing orientation; the 3D display device further comprises an eye positioning apparatus or an eye positioning data interface, configured to acquire eye positioning data; and the 3D processing apparatus is configured to determine the viewing orientation of the user according to the obtained eye positioning data.

In some embodiments, the 3D processing apparatus is configured to render subpixels in a multi-viewpoint 3D display screen of the 3D display device based on the adjusted display orientation of the image.

In some embodiments, the 3D processing apparatus is configured to render corresponding subpixels of a plurality of composite subpixels in the multi-viewpoint 3D display screen of the 3D display device according to a to-be-played 3D image, in response to the posture change of the 3D display device.

In some embodiments, the 3D processing apparatus is configured to render at least one subpixel of each composite subpixel in the multi-viewpoint 3D display screen of the 3D display device according to a to-be-played 2D image, in response to the posture change of the 3D display device.

In some embodiments, the 3D processing apparatus is configured to render the corresponding subpixels of each composite subpixel in the multi-viewpoint 3D display screen of the 3D display device according to the to-be-played 2D image, based on the eye positioning data.

The computer-readable storage medium provided by the embodiments of the present disclosure stores computer-executable instructions; and the computer-executable instructions are configured to execute the method for realizing 3D image display.

The computer program product provided by the embodiments of the present disclosure comprises a computer program stored on the computer-readable storage medium; the computer program comprises program instructions; and when the program instructions are executed by a computer, the computer is allowed to execute the above method for realizing 3D image display.

The method for realizing 3D image display, the 3D display device, the computer-readable storage medium, and the computer program product provided by the embodiments of the present disclosure may achieve the following technical effects:
Electronic devices can provide excellent 3D or 2D display in different postures; and posture conversion does not affect experience of the user. In addition, a display resolution of the multi-viewpoint 3D display screen is defined in a mode of composite pixels; and the display resolution defined by composite pixels is taken into consideration during transmission and display, to reduce calculation of transmission and rendering while ensuring high-definition display effect, and to realize high-quality 3D display.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Figs. 1A to 1C are structural schematic diagrams of a 3D display device according to embodiments of the present disclosure;
Fig. 2 is a structural schematic diagram of hardware of a 3D display device according to an embodiment of the present disclosure;
Fig. 3 is a structural schematic diagram of software of a 3D display device according to an embodiment of the present disclosure;
Figs. 4A and 4B are schematic diagrams of formats and contents of images contained in video frames of 3D video signals according to embodiments of the present disclosure;
Fig. 5A is a front schematic diagram of a 3D display device in a first posture according to an embodiment of the present disclosure;
Fig. 5B is a front schematic diagram of a 3D display device in a second posture according to an embodiment of the present disclosure;
Figs. 6A and 6B are schematic diagrams of rendering subpixels in a first posture by a 3D display device according to embodiments of the present disclosure;
Figs. 7A to 7D are schematic diagrams of rendering subpixels in a second posture by a 3D display device according to embodiments of the present disclosure;
Fig. 8 is a flow chart of switching display of 3D images and 2D images in a 3D display device according to an embodiment of the present disclosure; and
Fig. 9 is a structural schematic diagram of a 3D display device according to an embodiment of the present disclosure.

### Reference numerals:

100: 3D display device; 110: multi-viewpoint 3D display screen; 120: processor; 121: register; 130: 3D processing apparatus; 131: buffer; 140: video signal interface; 150: eye positioning apparatus; 160: eye positioning data interface; 180: posture detection apparatus; 200: 3D display device; 201: processor; 202: multi-viewpoint 3D display screen; 203: 3D processing apparatus; 204: video signal interface; 205: eye positioning apparatus; 206: shooting apparatus; 207: indicator; 208: motor; 209: button; 210: memory; 211: subscriber identity module (SIM) card interface; 212: external memory interface; 213: universal serial bus (USB) interface; 214: charging management module; 215: power management module; 216: battery; 217: register; 218: GPU; 219: codec; 220: sensor module; 221: proximity light sensor; 222: ambient light sensor; 223: pressure sensor; 224: air pressure sensor; 225: magnetic sensor; 226: gravity sensor; 227: gyro sensor; 228: acceleration sensor; 229: distance sensor; 230: temperature sensor; 231: fingerprint sensor; 232: touch sensor; 233: bone conduction sensor; 234: audio module; 235: loudspeaker; 236: telephone receiver; 237: microphone; 238: earphone interface; 239: antenna; 240: mobile communication module; 241: antenna; 242: wireless communication module; 300: 3D display device; 310: memory; 320: processor; 330: bus; 340: communication interface; 400: composite pixel; 410: red composite subpixel; 420: green composite subpixel; 430: blue composite subpixel; 510: application program layer; 520: framework layer; 530: core class library and runtime; 540: kernel layer; 601: one of two images contained in video frames of a 3D video signal; 602: one of two images contained in video frames of a 3D video signal; 700: 3D display device; 710: eye positioning apparatus; 720: first posture playing region; 730: multi-viewpoint 3D display screen; and 740: second posture playing region.

### DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

Embodiments of the present disclosure provide a 3D display device, comprising a multi-viewpoint 3D display screen (such as: a multi-viewpoint naked-eye 3D display screen). Optionally, the multi-viewpoint 3D display screen comprises a plurality of composite pixels, each of which comprises a plurality of composite subpixels, and each of the plurality of composite subpixels comprises a plurality of subpixels corresponding to a plurality of viewpoints in one posture of the 3D display device.

In some embodiments, the 3D display device may comprise a posture detection apparatus and a 3D processing apparatus.

In some embodiments, the multi-viewpoint 3D display screen comprises a plurality of composite pixels, a first posture playing region corresponding to a first posture of the 3D display device, and a second posture playing region corresponding to a second posture of the 3D display device. Each composite pixel comprises a plurality of composite subpixels, each composite subpixel is composed of a plurality of homochromatic subpixels, and the homochromatic subpixels of each composite subpixel correspond to multiple viewpoints in the first posture of the 3D display device. The posture detection apparatus is configured to detect a posture of the 3D display device. A 3D signal interface is configured to receive 3D signals; and the 3D processing apparatus is configured to process the 3D signals to play 3D images from the 3D signals in the first posture playing region and 2D images from the 3D signals in the second posture playing region.

In some embodiments, the 3D processing apparatus is in communication connection with the multi-viewpoint 3D display screen. In some embodiments, the 3D processing apparatus is in communication connection with a driving apparatus of the multi-viewpoint 3D display screen.

In some embodiments, the posture detection apparatus is in communication connection with the 3D processing apparatus.

In some embodiments, the posture of the 3D display device comprises at least one of: a transverse screen display posture, a vertical screen display posture, and an oblique screen display posture.

In some embodiments, the first posture of the 3D display device before the posture change comprises: any one of the transverse screen display posture, the vertical screen display posture, and the oblique screen display posture, and the second posture of the 3D display device after the posture change comprises: any one, different from the first posture, of the transverse screen display posture, the vertical screen display posture, and the oblique screen display posture.

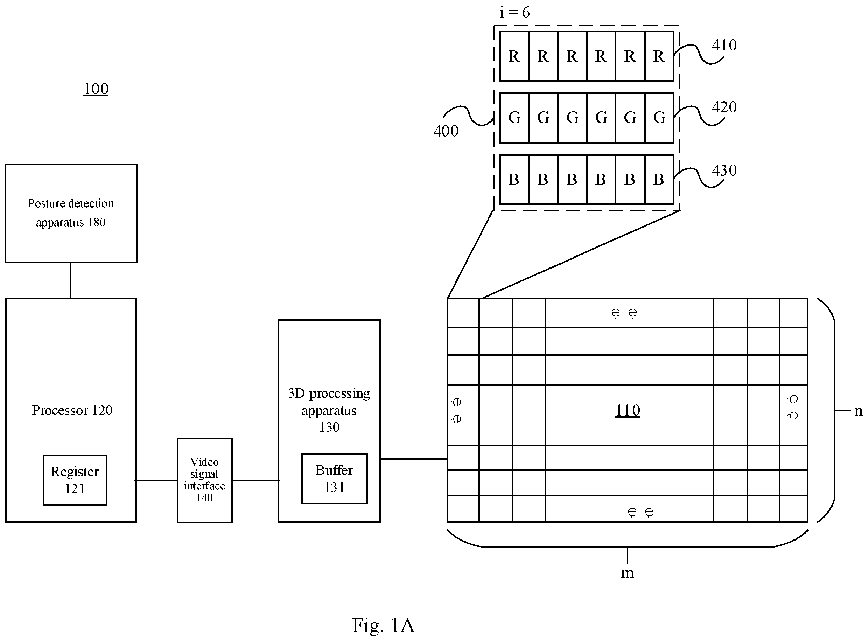

Fig. 1A shows a 3D display device 100 according to embodiments of the present disclosure. As shown in Fig. 1A, the 3D display device 100 comprises a multi-viewpoint 3D display screen 110, at least one 3D processing apparatus 130, a 3D signal interface (such as a video signal interface 140) configured to receive video frames of 3D signals such as 3D video signals, a processor 120, and a posture detection apparatus 180.

In some embodiments, the multi-viewpoint 3D display screen 110 may comprise a display panel and gratings (not shown) covering the display panel. In an embodiment shown in Fig. 1A, the multi-viewpoint 3D display screen 110 may comprise m columns and n rows (mxn) of composite pixels 400 and thus define a display resolution of m×n.

In some embodiments, each composite pixel comprises a plurality of composite subpixels. In the embodiment shown in Fig. 1A, each composite pixel 400 comprises three composite subpixels 410, 420, and 430. The three composite subpixels respectively correspond to three colors, i.e., a red composite subpixel 410, a green composite subpixel 420, and a blue composite subpixel 430.

Each composite subpixel is composed of i homochromatic subpixels corresponding to i viewpoints, and i>3. In the embodiment shown in Fig. 1A, i=6; each composite subpixel has six homochromatic subpixels; and the 3D display device 100 may have six viewpoints VI-V6 accordingly. As shown in Fig. 1A, the red composite subpixel 410 has six red subpixels R, the green composite subpixel 420 has six green subpixels G, and the blue composite subpixel 430 has six blue subpixels B. In other embodiments, i may be other values greater than or less than six.

In the embodiment shown in Fig. 1A, the subpixels R, G, and B of each composite subpixel 410, 420, or 430 are respectively arranged in rows, for example, in a single row; and the composite subpixels 410, 420, and 430 in rows are parallel to each other. However, conceivably, the composite subpixels in each composite pixel may be in other different arrangement forms or the subpixels in each composite subpixel may be in other different arrangement forms. In some embodiments, the subpixels in each composite subpixel are arranged in columns, for example, in a single column. In some embodiments, the subpixels in each composite subpixel are arranged in an array form.

In embodiments of the present disclosure, each composite subpixel has corresponding subpixels corresponding to viewpoints. The plurality of subpixels of each composite subpixel are arranged in rows in a transverse direction of the multi-viewpoint 3D display screen, and colors of the plurality of subpixels in rows are the same. Because the multiple viewpoints of the 3D display device are roughly arranged along the transverse direction of the multi-viewpoint 3D display screen, when the user moves to make eyes be in different viewpoints, different subpixels, corresponding to the corresponding viewpoints, in each composite subpixel need to be rendered dynamically. Because the homochromatic subpixels in each composite subpixel are arranged in rows, a cross-color problem caused by persistence of vision can be avoided. In addition, due to refraction of the gratings, a part of currently displayed subpixels may be seen at an adjacent viewpoint; but through arrangement of subpixels with the same color in the same row, a problem of color mixing is absent even if a part of the currently displayed subpixels are seen.

In some embodiments, as shown in Fig. 1A, the 3D display device 100 may be provided with a single 3D processing apparatus 130. The single 3D processing apparatus 130 simultaneously processes the rendering of subpixels in each composite subpixel of the 3D display screen 110. In some embodiments, the 3D display device may be provided with at least two 3D processing apparatuses. At least two 3D processing apparatuses process the rendering of subpixels in each composite subpixel of the multi-viewpoint 3D display screen in parallel, serial or a combination of parallel and serial. Those skilled in the art will understand that the above at least two 3D processing apparatuses may allocate and process multiple rows and columns of composite pixels or composite subpixels of the multi-viewpoint 3D display screen in parallel in other ways, which falls within the scope of embodiments of the present disclosure.

In some embodiments, the 3D processing apparatus 130 may optionally comprise a buffer 131, to buffer the received video frames.

In some embodiments, the 3D processing apparatus is an FPGA or ASIC chip or an FPGA or ASIC chipset.

Referring to Fig. 1A, the 3D display device 100 may further comprise a processor 120 in communication connection to the 3D processing apparatus 130 through a video signal interface 140. In some embodiments, the processor 120 is contained in a computer or an intelligent terminal such as a mobile terminal, or serves as a processor apparatus.

For the sake of simplicity, hereinafter, an exemplary embodiment of the 3D display device 100 internally comprises the processor 120. The video signal interface 140 is correspondingly configured as an internal interface for connecting the processor 120 with the 3D processing apparatus 130. Such a 3D display device 100, for example, may be a mobile terminal, and the video signal interface 140 as the internal interface of the 3D display device 100 may be a mobile industry processor interface (MIPI), a mini-MIPI, a low voltage differential signaling (LVDS) interface, a min-LVDS interface or a Display Port interface.

In some embodiments, as shown in Fig. 1A, the processor 120 of the 3D display device 100 may further comprise a register 121. The register 121 may be configured to temporarily store instructions, data and addresses.

In some embodiments, the posture detection apparatus 180 is in communication connection with the processor 120. In some embodiments, the posture detection apparatus 180 comprises a gravity sensor. In other embodiments, the posture detection apparatus 180 comprises a gyro sensor. In yet other embodiments, the posture detection apparatus 180 comprises a gravity sensor and a gyro sensor.

In some embodiments, the 3D display device further comprises an eye positioning apparatus or an eye positioning data interface, configured to acquire eye positioning data.

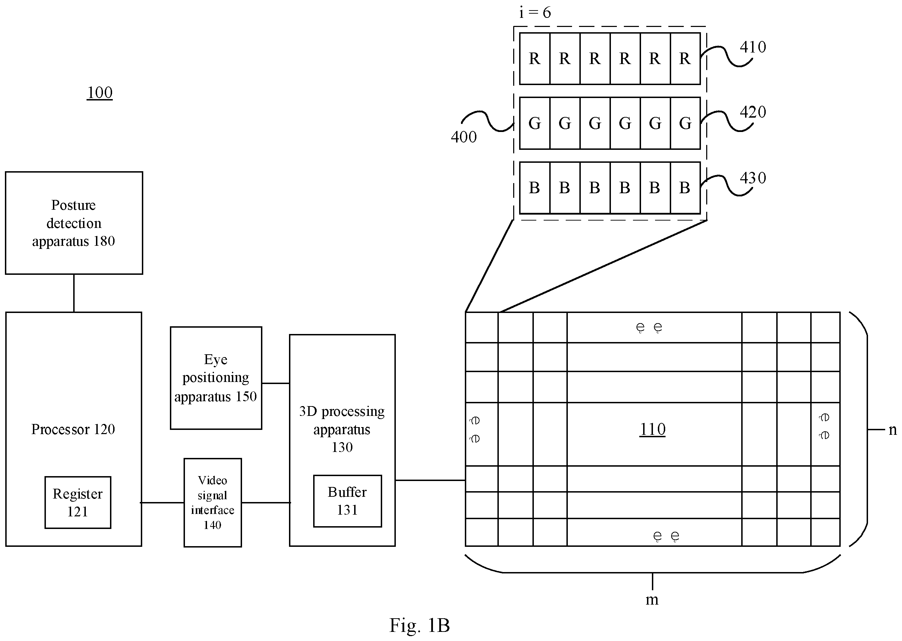

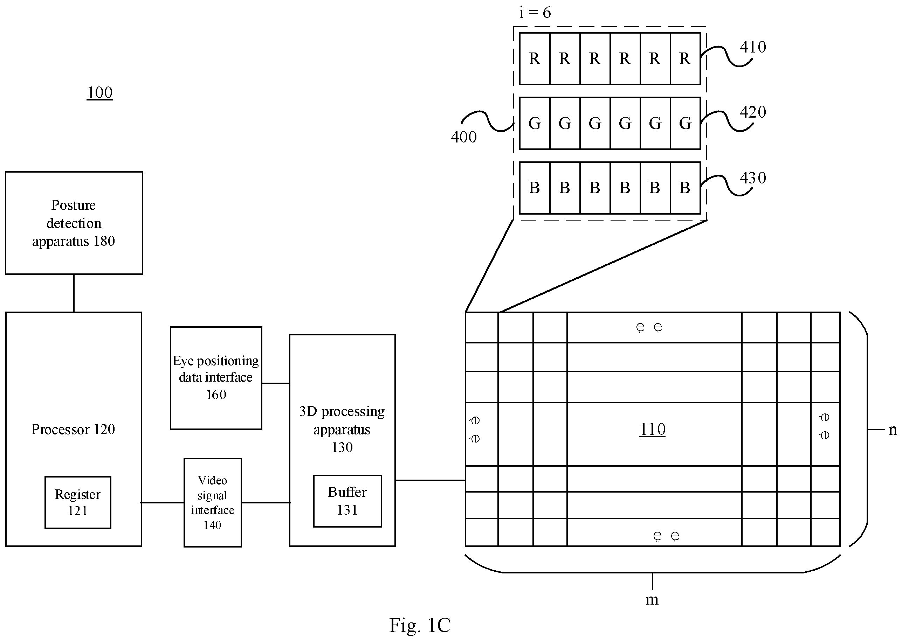

For example, in an embodiment shown in Fig. 1B, the 3D display device 100 further comprises an eye positioning apparatus 150 in communication connection to the 3D processing apparatus 130, so that the 3D processing apparatus 130 may directly receive eye positioning data. In an embodiment shown in Fig. 1C, an eye positioning apparatus (not shown), for example, may be directly connected to the processor 120, and the 3D processing apparatus 130 acquires eye positioning data from the processor 120 through an eye positioning data interface 160. In other embodiments, the eye positioning apparatus may be simultaneously connected with the processor and the 3D processing apparatus, so that on the one hand, the 3D processing apparatus 130 may directly acquire eye positioning data from the eye positioning apparatus, and on the other hand, other information acquired by the eye positioning apparatus may be processed by the processor.

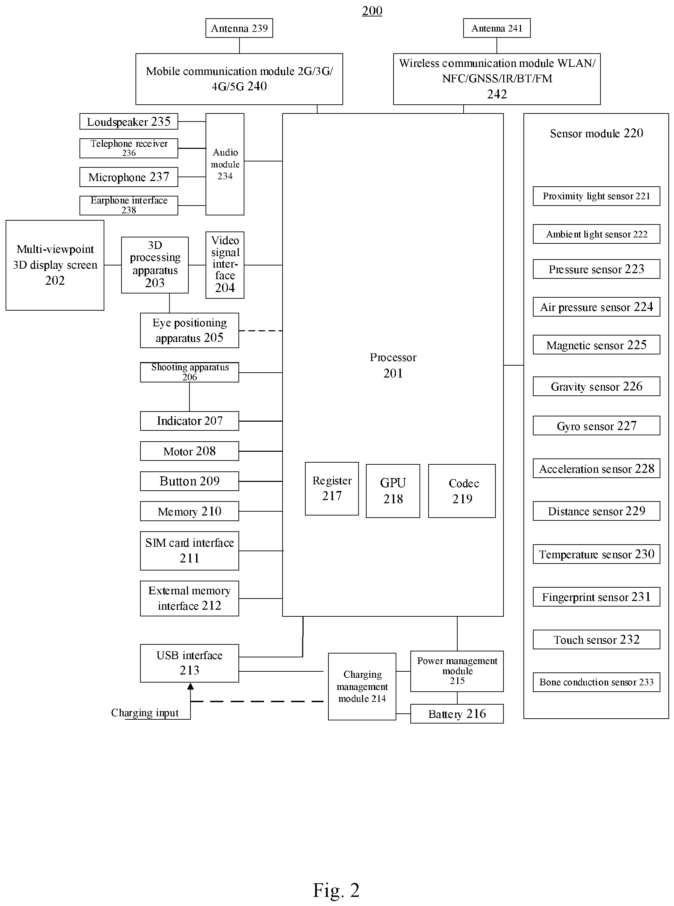

Exemplarily, Fig. 2 shows a structural schematic diagram of hardware of a 3D display device 200 implemented as a mobile terminal such as a smart cell phone, or a tablet personal computer (PC). In the illustrated embodiment, the 3D display device 200 may comprise a processor 201, an external memory interface 211, an (internal) memory 210, a USB interface 213, a charging management module 214, a power management module 215, a battery 216, a mobile communication module 240, a wireless communication module 242, antennas 239 and 241, an audio module 234, a loudspeaker 235, a telephone receiver 236, a microphone 237, an earphone interface 238, a button 209, a motor 208, an indicator 207, an SIM card interface 221, a multi-viewpoint 3D display screen 202, a 3D processing apparatus 203, a 3D signal interface (such as a video signal interface 204), a shooting apparatus 206, an eye positioning apparatus 205 and a sensor module 220.

In some embodiments, the sensor module 220 may comprise a proximity light sensor 221, an ambient light sensor 222, a pressure sensor 223, an air pressure sensor 224, a magnetic sensor 225, a gravity sensor 226, a gyro sensor 227, an acceleration sensor 228, a distance sensor 229, a temperature sensor 230, a fingerprint sensor 231, a touch sensor 232, and a bone conduction sensor 233.

Understandably, the schematic structures of embodiments of the present disclosure do not constitute a specific limitation on the 3D display device 200. In other embodiments of the present disclosure, the 3D display device 200 may comprise more or fewer components than shown in diagrams, or combine some components, or split some components, or use different component arrangements. The components shown in the diagrams may be implemented by hardware, software or a combination of software and hardware.

The processor 201 may comprise one or more processing units. In some embodiments, the processor 201 may comprise one or a combination of at least two of: an application processor (AP), a modem processor, a baseband processor, a graphics processing unit (GPU), an image signal processor (ISP), a controller, a memory, a video codec, a digital signal processor (DSP), a baseband processor, a neural network processor (NPU) and the like. In some embodiments, different processing units may be independent elements; and in some embodiments, different processing units may be integrated in one or more processors.

In some embodiments, the processor 201 may further be provided with a cache, used for storing instructions or data just used or recycled by the processor 201. When the processor 201 intends to reuse the instructions or data, the instructions or data can be directly called from the memory.

In some embodiments, the processor 201 may comprise one or more interfaces. Interfaces may comprise an integrated circuit (I2C) interface, an integrated circuit built-in audio (I2S) interface, a pulse code modulation (PCM) interface, a universal asynchronous telephone receiver-transmitter (UART) interface, a mobile industry processor interface (MIPI), a general purpose input-output (GPIO) interface, an SIM interface, a USB interface and the like.

The I2C interface is a bidirectional synchronous serial bus, and comprises a serial data line (SDA) and a serial clock line (SCL). In some embodiments, the processor 201 may comprise multiple groups of I2C buses. The processor 201 may be in communication connection with a touch sensor, a charger, a flash lamp, a shooting apparatus, an eye positioning apparatus and the like through different I2C bus interfaces, respectively.

Both the I2S interface and the PCM interface may be used for audio communication.

The UART interface is a universal serial data bus, used for asynchronous communication. The bus may be a bidirectional communication bus. The bus converts to-be-transmitted data between serial communication and parallel communication. In some embodiments, the UART interface is used for connecting the processor 201 with the wireless communication module 242.

In an embodiment shown in Fig. 2, the MIPI may be used for connecting the processor 201 with the multi-viewpoint 3D display screen 202. In addition, the MIPI may also be used for connecting peripheral elements, such as the shooting apparatus 206 and the eye positioning apparatus 205.

The GPIO interface may be configured by software. The GPIO interface may be configured as a control signal, and may also be configured as a data signal. In some embodiments, the GPIO interface may be used for connecting the processor 201 with the shooting apparatus 206, the multi-viewpoint 3D display screen 202, the wireless communication module 242, the audio module 234, the sensor module 220 and the like.

The USB interface 213 is an interface compliant with USB standard specifications, and may be a Mini USB interface, a Micro USB interface, a USB Type C interface or the like. The USB interface 213 may be used for connecting with the charger to charge the 3D display device 200, and may also be used for transmitting data between the 3D display device 200 and the peripheral devices. The USB interface 213 may also be used for connecting with earphones and playing audio through the earphones.

Understandably, an interface connection relationship, among various modules, illustrated in embodiments of the present disclosure is only used for schematic illustration, without constructing structural limitation to the 3D display device 200.

A wireless communication function of the 3D display device 200 may be realized by the antennas 241 and 239, the mobile communication module 240, the wireless communication module 242, the modem processor, the baseband processor or the like.

The antennas 241 and 239 are configured to transmit and receive electromagnetic wave signals. Each antenna in the 3D display device 200 may be used for covering a single or multiple communication frequency bands. Different antennas may further be reused, to improve a utilization rate of antennas.

The mobile communication module 240 may provide solutions for wireless communication, comprising 2G/3G/4G/5G, applied to the 3D display device 200. The mobile communication module 240 may comprise at least one filter, a switch, a power amplifier, a low noise amplifier (LNA) and the like. The mobile communication module 240 may receive electromagnetic waves through the antenna 239, filter and amplify the received electromagnetic waves, and transmit the processed electromagnetic waves to the modem processor for demodulation. The mobile communication module 240 may further amplify a signal modulated by the modem processor, and then convert the amplified signal into an electromagnetic wave through the antenna 239 for radiation. In some embodiments, at least part of functional modules of the mobile communication module 240 may be arranged in the processor 201. In some embodiments, at least part of functional modules of the mobile communication module 240 may be arranged in the same element together with at least part of modules of the processor 201.

The wireless communication module 242 may provide solutions for wireless communication, comprising a wireless local area network (WLAN), a Bluetooth (BT), a global navigation satellite system (GNSS), a frequency modulation (FM), a near field communication technology (NFC), an infrared technology (IR) and the like, applied to the 3D display device 200. The wireless module 242 may be one or more elements for integrating at least one communication processing module. The wireless communication module 242 receives an electromagnetic wave through the antenna 241, modulates and filters an electromagnetic wave signal, and transmits the processed signal to the processor 201. The wireless communication module 242 may further receive a to-be-transmitted signal from the processor 201, modulate and amplify the received signal, and convert the processed signal into an electromagnetic wave through the antenna 241 for radiation.

In some embodiments, the antenna 239 of the 3D display device 200 is coupled with the mobile communication module 240, and the antenna 241 is coupled with the wireless communication module 242, so that the 3D display device 200 may communicate with the network and other devices through wireless communication technology. The wireless communication technology may comprise at least one of global system for mobile communications (GSM), general packet radio service (GPRS), code division multiple access (CDMA), wideband code division multiple access (WCDMA), time division code division multiple access (TD-SCDMA), long term evolution (LTE), BT, GNSS, WLAN, NFC, FM and IR technologies. The GNSS may comprise at least one of a global positioning system (GPS), a global navigation satellite system (GLONASS), a Beidou satellite navigation system (BDS), a quasi-zenith satellite system (QZSS), and a satellite-based augmentation system (SBAS).

In some embodiments, the external interface for receiving 3D video signals may comprise the USB interface 213, the mobile communication module 240, the wireless communication module 242, or any combination thereof. In addition, other possible interfaces for receiving 3D video signals, such as the above interfaces, are conceivable.

The memory 210 may be used for storing computer-executable program codes, which comprise instructions. The processor 201 implements application of various functions and data processing of the 3D display device 200 by running the instructions stored in the memory 210. The memory 210 may comprise a program storage region and a data storage region, wherein the program storage region may store an operating system, application programs required by at least one function (such as a sound playing function and an image playing function) and the like. The data storage region may store data (such as audio data and phonebook) created during use of the 3D display device 200 and the like. The memory 203 may comprise a high-speed random access memory (RAM), and may further comprise a nonvolatile memory (NVM), such as at least one disk storage, flash memory, and universal flash storage (UFS).

The external memory interface 212 may be used for connecting with an external memory card, such as a Micro SD card, to expand storage capacity of the 3D display device 200. The external memory card communicates with the processor 201 through the external memory interface 212, to realize a data storage function.

In some embodiments, memories of the 3D display device may comprise the (internal) memory 210, an external memory card connected with the external memory interface 212, or a combination thereof. In other embodiments of the present disclosure, the video signal interface may also adopt internal interface connection modes or combinations thereof different from connection modes in the above embodiments.

In embodiments of the present disclosure, the shooting apparatus 206 may capture images or videos.

In some embodiments, the 3D display device 200 realizes a display function through the video signal interface 204, the 3D processing apparatus 203, the multi-viewpoint 3D display screen 202, and the application processor.

In some embodiments, the 3D display device 200 may comprise a GPU 218, for example, be used for processing 3D video images in the processor 201, and be also used for processing 2D video images.

In some embodiments, the 3D display device 200 further comprises a video codec 219 configured to compress or decompress digital videos.

In some embodiments, the video signal interface 204 is configured to output video frames of a 3D video signal, such as a decompressed 3D video signal, processed by the GPU 218 or the codec 219 or both to the 3D processing apparatus 203.

In some embodiments, the GPU 218 or the codec 219 is integrated with a format adjuster.

The multi-viewpoint 3D display screen 202 is used for displaying 3D images or videos. The multi-viewpoint 3D display screen 202 comprises a display panel. The display panel may be a liquid crystal display (LCD), an organic light-emitting diode (OLED), an active matrix organic light-emitting diode or initiative matrix organic light-emitting diode (AMOLED), a flexible light-emitting diode (FLED), a Mini-LED, a Micro-LED, a Micro-OLED, a quantum dot light-emitting diode (QLED) or the like.

In some embodiments, the eye positioning apparatus 205 is in communication connection to the 3D processing apparatus 203, so that the 3D processing apparatus 203 may render the corresponding subpixels in the composite pixels (composite subpixels) based on the eye positioning data. In some embodiments, the eye positioning apparatus 205 may further be connected with the processor 201, for example, be in by-passing connection with the processor 201.

The 3D display device 200 may realize audio functions through the audio module 234, the loudspeaker 235, the telephone receiver 236, the microphone 237, the earphone interface 238, the application processor and the like, such as music playing and recording. The audio module 234 is configured to convert digital audio information into analog audio signal output, and is also configured to convert analog audio input into digital audio signals. The audio module 234 may further be configured to encode and decode audio signals. In some embodiments, the audio module 234 may be arranged in the processor 201, or some functional modules of the audio module 234 may be arranged in the processor 201. The loudspeaker 235 is configured to convert audio electrical signals into sound signals. The 3D display device 200 may listen to music or hands-free conversation through the loudspeaker 235. The telephone receiver 236, also called "telephone handset", is used for converting audio electrical signals into sound signals. When the 3D display device 200 answers calls or receives voice messages, the 3D display device 200 may receive voice by placing the telephone receiver 236 close to an ear. The microphone 237 is configured to convert sound signals into electrical signals. The earphone interface 238 is configured to connect with a wired earphone. The earphone interface 238 may be a USB interface, and may also be a 3.5 mm open mobile 3D display device platform (OMTP) standard interface or a cellular telecommunications industry association (CTIA) standard interface.

The button 209 comprises a power button, a volume button and the like. The button 209 may be a mechanical button, and may also be a touch button. The 3D display device 200 may receive button input, and generate button signal input related to user settings and function control of the 3D display device 200.

The motor 208 may generate a vibration alert. The motor 208 may be configured to vibrate to prompt an incoming call, and may also be configured to vibrate to feed touch back.

The SIM card interface 211 is configured to connect with an SIM card. In some embodiments, the 3D display device 200 adopts an embedded SIM card (eSIM).

The pressure sensor 223 is configured to sense pressure signals, and may convert the pressure signals into electrical signals. In some embodiments, the pressure sensor 223 may be arranged on the multi-viewpoint 3D display screen 202, which falls within the scope of embodiments of the present disclosure.

The air pressure sensor 224 is used for measuring air pressure. In some embodiments, the 3D display device 200 calculates an altitude by the air pressure value measured by the air pressure sensor 224, and assists in positioning and navigation.

The magnetic sensor 225 comprises a Hall sensor.

The gravity sensor 226, as a posture detection apparatus, can convert motion or gravity into electrical signals, and is configured to measure parameters, such as tilt angle, inertia force, impact and vibration.

The gyro sensor 227, as a posture detection apparatus, is configured to determine a motion posture of the 3D display device 200.

The gravity sensor 226 or the gyro sensor 227 may be adopted to detect that the 3D display device 200 is in a first posture or a second posture different from the first posture.

The acceleration sensor 228 may detect acceleration of the 3D display device 200 in various directions (generally three axes).

The distance sensor 229 may be configured to measure a distance.

The temperature sensor 230 may be configured to detect a temperature.

The fingerprint sensor 231 may be configured to collect fingerprints. The 3D display device 200 may utilize collected fingerprint characteristics to unlock with fingerprints, access an application lock, shoot with fingerprints, answer an incoming call with fingerprints, and the like.

The touch sensor 232 may be arranged in the multi-viewpoint 3D display screen 202; and the touch sensor 232 and the multi-viewpoint 3D display screen 202 form a touch screen, also called a "touch panel".

The bone conduction sensor 233 may acquire vibration signals.

The charging management module 214 is configured to receive charging input from the charger. In some embodiments, the charger may be a wireless charger, and may also be a wired charger. In some embodiments of wired charging, the charging management module 214 may receive the charging input of the wired charger through the USB interface 213. In some embodiments of wireless charging, the charging management module 214 may receive wireless charging input through a wireless charging coil of the 3D display device 200.

The power management module 215 is configured to connect the battery 216 and the charging management module 214 to the processor 201. The power management module 215 receives input from at least one of the battery 216 and the charging management module 214, and supplies power to the processor 201, the memory 210, the external memory, the multi-viewpoint 3D display screen 202, the shooting apparatus 206, the wireless communication module 242 and the like. In other embodiments, the power management module 215 and the charging management module 214 may also be arranged in the same element.

A software system of the 3D display device 200 may adopt a hierarchical architecture, an event-driven architecture, a microkernel architecture, a micro-service architecture or a cloud architecture. In embodiments shown in the present disclosure, an Android system with the hierarchical architecture is taken as an example, to illustrate a structure of software of the 3D display device 200. However, conceivably, the embodiments of the present disclosure may be implemented in different software systems, such as an operating system.

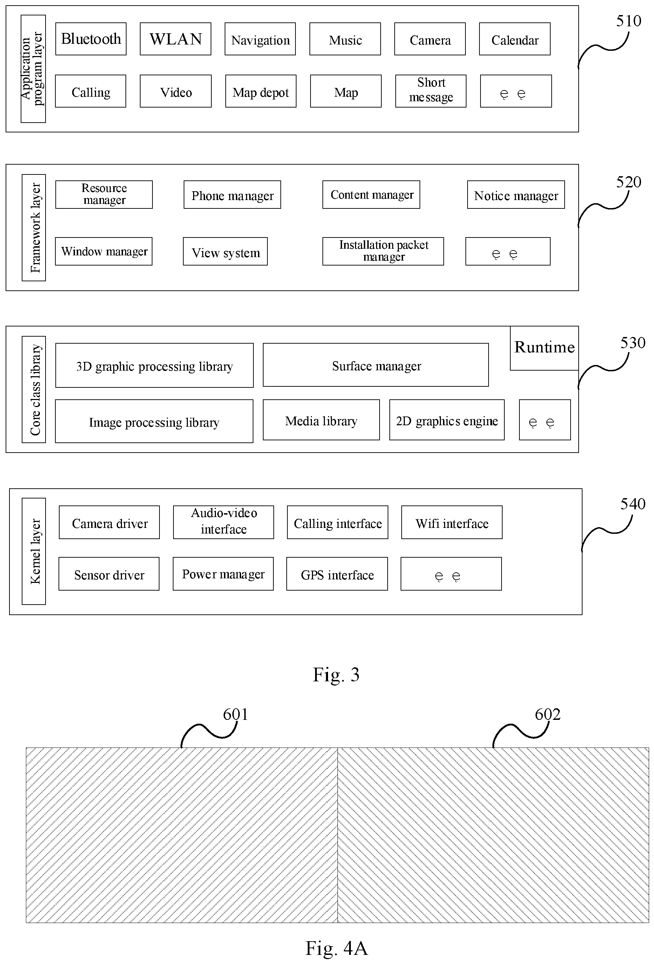

Fig. 3 is a structural schematic diagram of the software of the 3D display device 200 according to an embodiment of the present disclosure. The hierarchical architecture divides the software into several layers. The layers communicate with each other through a software interface. In some embodiments, the Android system is divided into four layers, from top to bottom, comprising an application program layer 510, a framework layer 520, core class library and runtime 530, and a kernel layer 540.

The application program layer 510 may comprise a series of application packages. As shown in Fig. 3, the application packages may comprise application programs, such as Bluetooth, WLAN, navigation, music, camera, calendar, call, video, map depot, map and short message. The 3D video display method according to embodiments of the present disclosure, for example, may be executed in a video application.

The framework layer 520 provides an application programming interface (API) and a programming framework for application programs in the application program layer. The framework layer comprises some predefined functions. For example, in some embodiments of the present disclosure, functions or algorithms for recognizing the acquired 3D video images and algorithms for processing images may be contained in the framework layer.

As shown in Fig. 3, the framework layer 520 may comprise a resource manager, a phone manager, a content manager, a notice manager, a window manager, a view system installation package and manager and the like.

Android Runtime comprises a core library and a virtual machine. The Android Runtime is responsible for scheduling and management of an Android system.

The core library comprises two parts: one is performance functions to be called by java language, and the other is the core library of Android.

The application program layer and the framework layer run in the virtual machine. The virtual machine executes java files of the application program layer and the framework layer as binary files. The virtual machine is used for implementing functions of object life cycle management, stack management, thread management, security and exception management, garbage collection and the like.

The core class library may comprise a plurality of functional modules, such as a 3D graphic processing library (such as OpenGL ES), a surface manager, an image processing library, a media library and a graphics engine (such as SGL).

The kernel layer 540 is a layer between hardware and software. The kernel layer at least comprises a camera driver, an audio-video interface, a calling interface, a Wifi interface, a sensor driver, a power manager and a GPS interface.

Here, an embodiment of 3D video transmission and display in a 3D display device is described by taking the 3D display device, as a mobile terminal, with the structures shown in Figs. 2 and 3 as an example. Conceivably, more or fewer characteristics may be contained in other embodiments, or changes may be made to the characteristics therein.

In some embodiments, for example, the 3D display device 200 implemented as a mobile terminal, such as a smart cell phone or a tablet PC, receives, for example, a compressed 3D video signal from a network, such as a cellular network, a WLAN or Bluetooth, for example, by means of the mobile communication module 240 and the antenna 239 or the wireless communication module 242 and the antenna 241 as external interfaces; the compressed 3D video signal, for example, is subjected to image processing of the GPU 218 as well as coding and decoding and decompression of the codec 219; and then, for example, a decompressed 3D video signal is transmitted to at least one 3D processing apparatus 203 through the video signal interface 204 as an internal interface, such as the MIPI or the mini-MIPI. A video frame of the decompressed 3D video signal comprises two images or composite images according to embodiments of the present disclosure. Furthermore, the 3D processing apparatus 203 correspondingly renders the subpixels in the composite subpixels of the multi-viewpoint 3D display screen 202, thereby realizing 3D video playing.

In other embodiments, the 3D display device 200 reads the compressed 3D video signal stored in the (internal) memory 210, or stored in an external memory card through the external memory interface 212, and realizes 3D video playing through corresponding processing, transmission and rendering.

In some embodiments, playing of the 3D video is implemented in a video application in the Android application program layer 510.

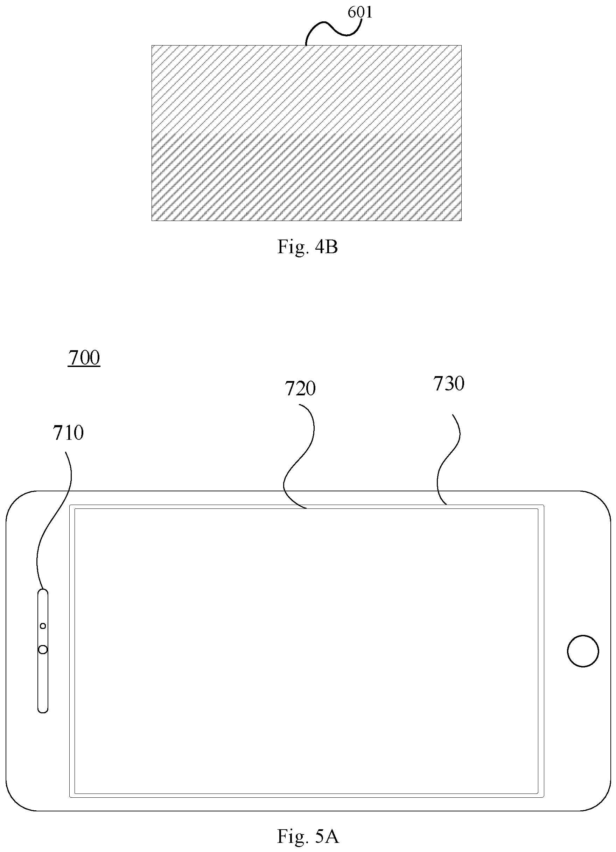

Transmission and display of a 3D video signal in the 3D display device according to embodiments of the present disclosure are described below with reference to Figs. 1A, 4A and 4B. In the illustrated embodiments, the multi-viewpoint 3D display screen 110 may define six viewpoints VI-V6; and eyes of the user may see the display of corresponding subpixels in the composite subpixels of each composite pixel in the display panel of the multi-viewpoint 3D display screen 110 at each viewpoint (spatial position). Two different pictures seen by both eyes of the user at different viewpoints form parallax, to composite a 3D picture in the brain.

In some embodiments of the present disclosure, the 3D processing apparatus 130 receives, for example, video frames of a decompressed 3D video signal from the processor 120 through, for example, the video signal interface 140 as the internal interface. Each video frame may contain two images, or contain composite images, or be composed of the above images.

In some embodiments, the two images or the composite images may comprise different types of images and may be in various arrangement forms.

As shown in Fig. 4A, each video frame of the 3D video signal contains or is composed of two images 601 and 602 in parallel. In some embodiments, the two images may be a left-eye parallax image and a right-eye parallax image, respectively. In some embodiments, the two images may be a rendered color image and a depth-of-field (DOF) image, respectively.

In some embodiments, each video frame of the 3D video signal contains interlaced composite images. In some embodiments, the composite images may be interlaced left-eye and right-eye parallax composite images, and interlaced rendered color and DOF composite images.

Those skilled in the art will understand that embodiments shown in the accompanying drawings are only schematic, and the two images or composite images contained in each video frame of the 3D video signal may comprise other types of images and may be in other arrangement forms, which fall within the scope of embodiments of the present disclosure.

In some embodiments, after receiving a video frame comprising two images 601 and 602, at least one 3D video processing apparatus 130 renders at least one subpixel in each composite subpixel based on one of the two images and at least another subpixel in each composite subpixel based on the other of the two images.

In other embodiments, after receiving a video frame comprising composite images, at least one 3D video processing apparatus renders at least two subpixels in each composite subpixel based on the composite images. For example, at least one subpixel is rendered according to a first image (part) in the composite images, and at least another subpixel is rendered according to a second image (part).

In some embodiments, the rendering for the subpixels in the composite subpixels is, for example, dynamic rendering performed based on the eye positioning data.

Referring to Fig. 4B, in some embodiments, after receiving a video frame of two images 601 and 602, which are respectively a left-eye parallax image and a right-eye parallax image, at least one 3D video processing apparatus 130 renders each composite pixel based on one of the two images to play a 2D image. In an embodiment shown in Fig. 4B, each composite pixel is rendered based on the image 601. In other embodiments, each composite pixel may also be rendered based on the image 602.

In some embodiments, the two images 601 and 602 are respectively a rendered color image and a DOF image; and a to-be-played 2D image is generated by the rendered color image and the DOF image.

In some embodiments, the 3D display device 100 further comprises a format adjuster (not shown), which is, for example, integrated in the processor 120, and is constructed as the codec or as a part of the GPU. The format adjuster is configured to pre-process the video frames of the 3D video signal, so that a played 3D image or 2D image is adapted to a resolution required by display or device.

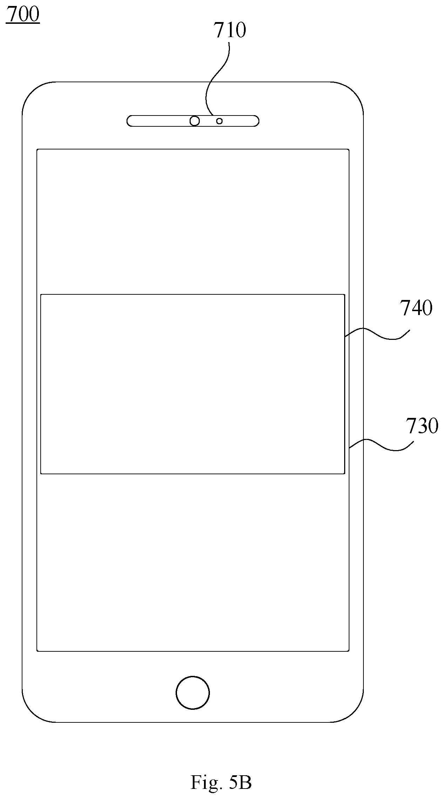

According to embodiments of the present disclosure, the 3D display device has two postures, and is adapted to the two postures to define two playing regions. Referring to Figs. 5A and 5B, in the illustrated embodiments, a 3D display device 700, for example, is a mobile terminal. Fig. 5A shows a front schematic diagram of the 3D display device 700 in a first posture. As shown in the figure, the first posture, for example, is a transverse screen display posture of the 3D display device 700, and the 3D display device 700 is adapted to the first posture to define a first posture playing region 720 in a multi-viewpoint 3D display screen 730. A plurality of (homochromatic) subpixels of the composite subpixels of each composite pixel in the display screen 730 correspond to multiple viewpoints of the 3D display device 700 in the first posture of the 3D display device 700. Fig. 5B shows a front schematic diagram of the 3D display device 700 in a second posture. As shown in the figure, the second posture, for example, is a vertical screen display posture of the 3D display device 700; and the 3D display device 700 is adapted to the second posture to define a second posture playing region 740 in the multi-viewpoint 3D display screen 730.

The 3D display device 700 may have a built-in posture detection apparatus and a 3D processing apparatus. The posture detection apparatus, for example, is a gravity sensor or a gyro sensor, and is configured to detect a posture that the 3D display device 700 is in, or switching of the posture, or both. The 3D processing apparatus is configured to process video frames of 3D signals, such as 3D video signals, to play 3D images from the 3D signals in the first posture playing region 720 when the 3D display device is in a transverse screen display posture and play 2D images from the 3D signals in the second posture playing region 740 when the 3D display device is in a vertical screen display posture.

In some embodiments, the 3D display device 700 is provided with an eye positioning apparatus 710, and the eye positioning apparatus 710 is configured to acquire eye positioning data.

In some embodiments, when the 3D display device is in the first posture or switched from the second posture to the first posture, the 3D processing device renders the corresponding subpixels of the composite subpixels in the first posture playing region according to a to-be-played 3D image, based on the eye positioning data. The eye positioning data, for example, comprise eye space position information of the user; and the 3D processing device may obtain positions of viewpoints, at which the eyes of the user are, based on the eye space position information. The corresponding subpixels rendered in the first posture playing region are subpixels corresponding to the positions of viewpoints, at which the eyes of the user are. A correspondence between viewpoints and eye space positions, and a correspondence between the subpixels and the viewpoints may be stored in the 3D processing device in the form of a correspondence table, or the 3D processing device may receive/acquire a correspondence table of the viewpoints and the eye space positions and a correspondence table of the subpixels and the viewpoints.

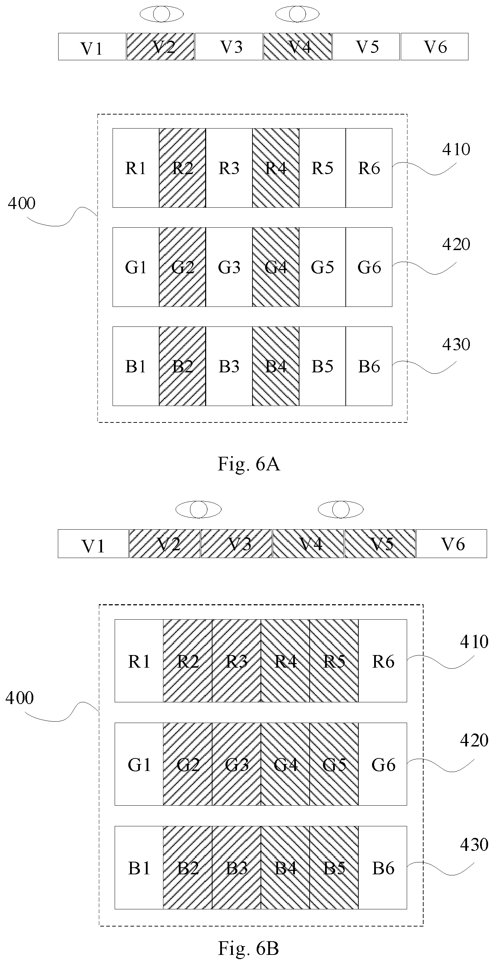

Referring to Fig. 6A, in the illustrated embodiment, the 3D display device may have six viewpoints VI-V6 corresponding to the first posture, and each composite pixel 400 in the multi-viewpoint 3D display screen of the 3D display device may have red composite subpixels 410, green composite subpixels 420, and blue composite subpixels 430. Each composite subpixel has six subpixels corresponding to six viewpoints. For the sake of clarity, only a correspondence between one composite pixel 400 and six viewpoints is shown in Fig. 6A.

In the case that the 3D display device is in the first posture or switched from the second posture to the first posture, when the eye positioning apparatus detects that both eyes of a user are respectively at one viewpoint, for example, a left eye is at a viewpoint V2 and a right eye is at a viewpoint V4, images of the two viewpoints, at which both eyes of the user are, are generated based on the video frames of the 3D video signals, and the corresponding subpixels, corresponding to the two viewpoints, of each composite subpixel are rendered in the first playing region. In an embodiment shown in Fig. 6, subpixels R2, G2, and B2, corresponding to the viewpoint V2, and subpixels R4, G4, and B4, corresponding to the viewpoint V4, of the composite subpixels 410, 420, and 430 are rendered.

Referring to Fig. 6B, in the illustrated embodiment, the 3D display device may have six viewpoints VI-V6 corresponding to the first posture; and each composite pixel 400 in the multi-viewpoint 3D display screen of the 3D display device may have red composite subpixels 410, green composite subpixels 420, and blue composite subpixels 430. Each composite subpixel has six subpixels corresponding to six viewpoints. For the sake of clarity, only a correspondence between one composite pixel 400 and six viewpoints is shown in Fig. 6B.

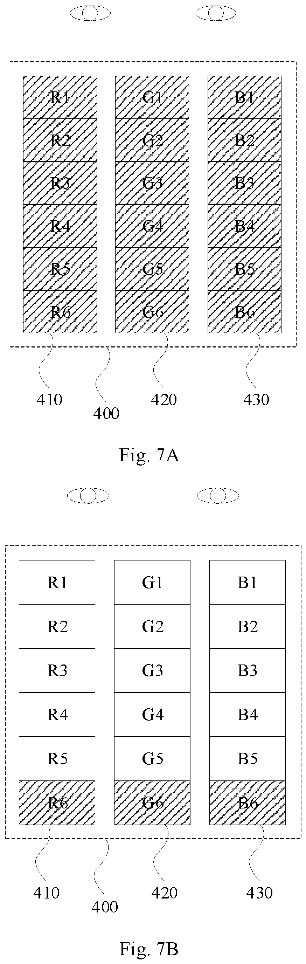

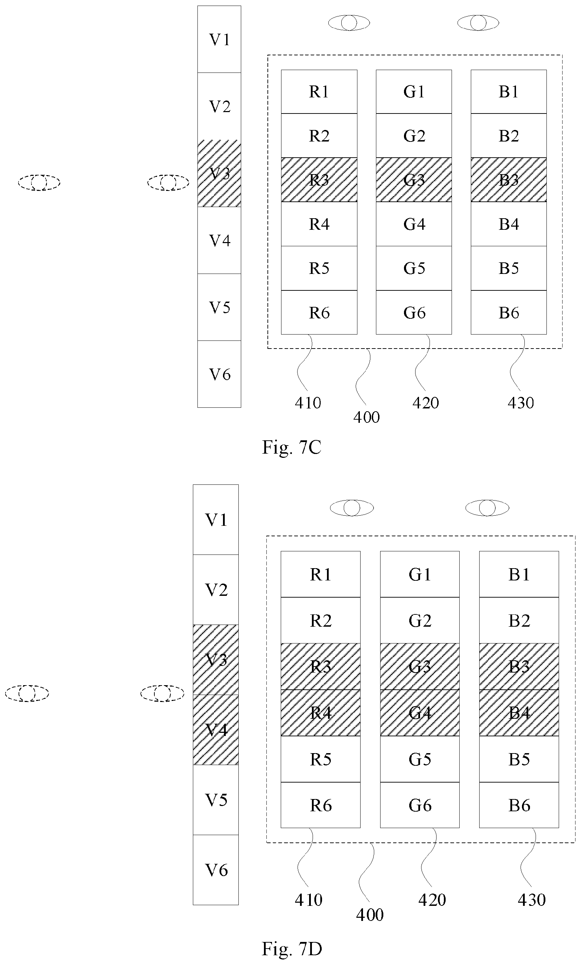

In the case that the 3D display device is in the first posture or switched from the second posture to the first posture, when the eye positioning apparatus detects that both eyes of the user are respectively involved in two adjacent viewpoints, for example, the left eye is involved in viewpoints V2 and V3 and the right eye is involved in viewpoints V4 and V5, images of the two viewpoints respectively involved in both eyes of the user are generated based on the video frames of the 3D video signals, and the corresponding subpixels, corresponding to the four viewpoints, of each composite subpixel are rendered in the first playing region. In an embodiment shown in Fig. 7, subpixels R2, R3, G2, G3, B2, and B3, corresponding to the viewpoints V2 and V3, and subpixels R4, R5, G4, G5, B4, and B5, corresponding to the viewpoints V4 and V5, of the composite subpixels 410, 420, and 430 are rendered.

In some embodiments, when the 3D display device is in the second posture or switched from the first posture to the second posture, the 3D processing device is configured to render at least one subpixel of the composite subpixels of each composite pixel according to a to-be-played 2D image within the second posture playing region. Thus, the 3D display device plays the 2D images from the 3D signals to the user in the second posture.

Referring to Fig. 7A, in the illustrated embodiment, the 3D display device may have six viewpoints VI-V6 (not shown) corresponding to the first posture, and each composite pixel 400 in the multi-viewpoint 3D display screen of the 3D display device may have red composite subpixels 410, green composite subpixels 420, and blue composite subpixels 430. Each composite subpixel has six subpixels corresponding to six viewpoints. For the sake of clarity, only one composite pixel 400 is shown in Fig. 7A.

When the 3D display device is in the second posture or switched from the first posture to the second posture, an image is generated based on the video frames of the 3D video signals; and all the subpixels of each composite subpixel are rendered in the second playing region. Thus, the 3D display device plays the 2D images from the 3D signals in the second posture.

Referring to Fig. 7B, in the illustrated embodiment, the 3D display device may have six viewpoints VI-V6 (not shown) corresponding to the first posture, and each composite pixel 400 in the multi-viewpoint 3D display screen of the 3D display device may have red composite subpixels 410, green composite subpixels 420, and blue composite subpixels 430. Each composite subpixel has six subpixels corresponding to six viewpoints. For the sake of clarity, only one composite pixel 400 is shown in Fig. 7B.

When the 3D display device is in the second posture or switched from the first posture to the second posture, an image is generated based on the video frames of the 3D video signals; and one subpixel of each composite subpixel is rendered in the second playing region. In the illustrated embodiment, R6 of the red composite subpixels 410, G6 of the green composite subpixels 420, and B6 of the blue composite subpixels 430 are rendered. Thus, the 3D display device plays the 2D images from the 3D signals in the second posture. Conceivably, in other embodiments, one or more other subpixels of each composite subpixel may be selected for rendering.

In some embodiments, when the 3D display device is in the second posture or switched from the first posture to the second posture, the 3D processing device renders the corresponding subpixels of each composite subpixel in the first posture playing region according to a to-be-played 2D image, based on real-time eye positioning data.

Referring to Fig. 7C, in the illustrated embodiment, the 3D display device may have six viewpoints VI-V6 corresponding to the first posture; and each composite pixel 400 in the multi-viewpoint 3D display screen of the 3D display device may have red composite subpixels 410, green composite subpixels 420, and blue composite subpixels 430. Each composite subpixel has six subpixels corresponding to six viewpoints. For the sake of clarity, only a correspondence between one composite pixel 400 and six viewpoints is shown in Fig. 7C.

When the 3D display device is in the second posture or switched from the first posture to the second posture, the eye positioning apparatus is utilized to detect positions of viewpoints, corresponding to the first posture, at which both eyes of the user are. In an embodiment shown in Fig. 7C, both eyes of the user are at a single viewpoint, such as viewpoint V3, in the first posture. After the real-time eye positioning data are acquired, an image of the single viewpoint, at which both eyes of the user are, is generated based on the video frames of the 3D video signals; and the subpixels, corresponding to the single viewpoint, of each composite subpixel are rendered in the second playing region. In an embodiment shown in Fig. 7C, subpixels R3, G3, and B3, corresponding to the viewpoint V3 in the first posture, of the composite subpixels 410, 420, and 430 are rendered. Thus, the 3D display device plays the 2D images from the 3D signals to the user at the viewpoint V3 in the second posture.

Referring to Fig. 7D, in the illustrated embodiment, the 3D display device may have six viewpoints VI-V6 corresponding to the first posture; and each composite pixel 400 in the multi-viewpoint 3D display screen of the 3D display device may have red composite subpixels 410, green composite subpixels 420, and blue composite subpixels 430. Each composite subpixel has six subpixels corresponding to six viewpoints. For the sake of clarity, only a correspondence between one composite pixel 400 and six viewpoints is shown in Fig. 7D.

When the 3D display device is in the second posture or switched from the first posture to the second posture, the eye positioning apparatus is utilized to detect positions of viewpoints, corresponding to the first posture, at which both eyes of the user are. In an embodiment shown in Fig. 7D, the eyes of the user are involved in two viewpoints, such as viewpoints V3 and V4, in the first posture. After the real-time eye positioning data are acquired, images of the two viewpoints involved in both eyes of the user are generated based on the video frames of the 3D video signals; and the subpixels, corresponding to the two viewpoints, of each composite subpixel are rendered in the second playing region. In an embodiment shown in Fig. 7D, subpixels R3, R4, G3, G4, B3, and B4, corresponding to the viewpoints V3 and V4 in the first posture, of the composite subpixels 410, 420, and 430 are rendered. Thus, the 3D display device plays the 2D images from the 3D signals to the user involved in the viewpoints V3 and V4 in the second posture.

In some embodiments, the 3D display device further comprises a format adjuster (not shown), configured to adjust the format of the 3D signals, for example, preprocess the video frames of the 3D video signals, to be suitable for playing the 2D image in the second posture playing region. For example, when the resolution of the 3D signals is inconsistent with a display resolution of the second posture playing region, the format adjuster preprocesses the resolution of the 3D signals, to adapt to the display resolution of the second posture playing region.

A method for realizing 3D image display with the above 3D display device is provided according to embodiments of the present disclosure. The method for realizing 3D image display comprises:
detecting a posture of the 3D display device, for example, detecting a posture, such as a first posture or a second posture, in which the 3D display device is, or detecting a posture change of the 3D display device, or detecting the posture in which the 3D display device is and the posture change;
when detecting that the posture of the 3D display device changes, adjusting a displayed image to a display dimension different from a display dimension before the posture of the 3D display device changes, and adjusting a display orientation of the displayed image, so that the display orientation of the displayed image is kept in an initial display orientation before the posture change of the 3D display device.

In the embodiment of the present disclosure, the display dimension of the 3D display device comprises a 2D display dimension and a 3D display dimension. In some embodiments, the 3D display device plays 3D images based on being in the first posture, and plays 2D images based on being in the second posture.

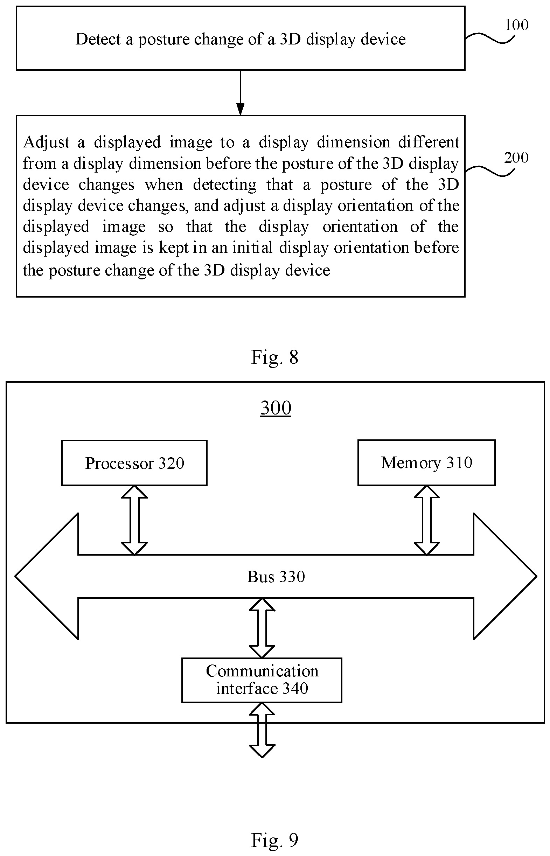

Such as an embodiment shown in Fig. 8, in some embodiments, the method for realizing 3D image display comprises:
S 100, detecting a posture change of the 3D display device; and
S200, when detecting that the posture of the 3D display device changes, adjusting a displayed image to a display dimension different from a display dimension before the posture of the 3D display device changes, and adjusting a display orientation of the displayed image, so that the display orientation of the displayed image is kept in an initial display orientation before the posture change of the 3D display device.

In some embodiments, step S200 may comprise: when detecting the posture change of the 3D display device, adjusting the display dimension of the displayed image so that the display dimension after the posture change is different from the display dimension before the posture change (for example, the 3D image displayed before the posture change, the 2D image displayed after the posture change, or vice versa), and adjusting the display of the displayed image so that the display orientation of the displayed image is kept in the initial display orientation before the posture change of the 3D display device. In this way, the displayed image may always be adapted to the viewing orientation of the user.

In some embodiments, the detection of the posture in which the 3D display device is and the posture change may be completed by a posture detection apparatus. In some embodiments, the display dimension of the displayed image is adjusted, so that the display dimension after the posture change is different from the display dimension before the posture change; the display of the displayed image is adjusted, so that the display orientation of the displayed image is kept in the initial display orientation before the posture change of the 3D display device; and the step may be completed by a 3D processing apparatus.

In some embodiments, detecting a posture change of the 3D display device comprises: detecting a rotational angular velocity of the 3D display device, and determining the posture change of the 3D display device according to the rotational angular velocity.

In some embodiments, adjusting a display orientation of the displayed image comprises: rotating the display orientation of an image in a plane in which the image is located, so that the image is kept in the initial display orientation before the posture change of the 3D display device.

In some embodiments, the posture of the 3D display device comprises at least one of: a transverse screen display posture, a vertical screen display posture, and an oblique screen display posture.

In some embodiments, the first posture of the 3D display device before the posture change comprises: any one of the transverse screen display posture, the vertical screen display posture, and the oblique screen display posture, and the second posture of the 3D display device after the posture change comprises: any one, different from the first posture, of the transverse screen display posture, the vertical screen display posture, and the oblique screen display posture.

In some embodiments, adjusting a display orientation of the displayed image comprises: rotating the image to keep the image in the initial display orientation corresponding to the first posture. In this way, for the user, no matter how to adjust the posture of the 3D display device, the display orientations of the seen 3D images are consistent.

In some embodiments, when any one of the first posture and the second posture is the oblique screen display posture, adjusting a display orientation of the displayed image further comprises: displaying the image in a full screen display mode.

In some embodiments, adjusting a display orientation of the displayed image comprises: rotating the display orientation of the image in a plane in which the image is located, so that the image is kept within an initial display orientation range, wherein the initial display orientation range comprises the initial display orientation. In this way, the display orientation of the displayed 3D image may be fine-adjusted or adjusted according to motion of the user, to adapt to the motion of the user.

In some embodiments, the display orientation of the displayed image is adjusted according to a viewing orientation of the user, so that the display orientation of the image coincides with the viewing orientation of the user. The viewing orientation of the user may comprise any one of a transverse viewing orientation, a vertical viewing orientation, and an oblique viewing orientation.

In some embodiments, eye positioning may further be performed for the user, and the viewing orientation of the user is determined according to the obtained eye positioning data. The above, for example, may be implemented by an eye positioning apparatus.

In some embodiments, adjusting the display orientation of the displayed image comprises: rendering subpixels in a multi-viewpoint 3D display screen of the 3D display device based on the adjusted display orientation (or the display orientation after the posture change of the 3D display device) of the image.

In some embodiments, adjusting the displayed image to a 3D image comprises: rendering the corresponding subpixels in each composite subpixel according to a to-be-played 3D image, in response to the posture change of the 3D display device.

In some embodiments, adjusting the displayed image to a 2D image comprises: rendering at least one subpixel in each composite subpixel according to a to-be-played 2D image, in response to the posture change of the 3D display device.

In some embodiments, rendering at least one subpixel in each composite subpixel according to a to-be-played 2D image comprises: rendering the corresponding subpixels in each composite subpixel according to the to-be-played 2D image, based on the eye positioning data.

The adjustment of the display orientation of the 3D image and the rendering of the subpixels may be completed by the 3D processing apparatus.

In some embodiments, the method for realizing 3D image display further comprises acquiring 3D signals.

According to embodiments of the present disclosure, the "posture" of the 3D display device is equivalent to the "orientation" of the 3D display device.

In some embodiments, the method for realizing 3D image display further comprises: switching to play 3D images from 3D signals in the 3D display device in response to the posture change of the 3D display device, which may comprise: playing the 3D images from the 3D signals in a first posture playing region defined by the multi-viewpoint 3D display screen, in response to a signal that the 3D display device changes to the first posture or is in the first posture.

In some embodiments, the method for realizing 3D image display further comprises: switching to play 2D images from the 3D signals in the 3D display device in response to the posture change of the 3D display device, which may comprise: playing the 2D images from the 3D signals in a second posture playing region defined by the multi-viewpoint 3D display screen, in response to a signal that the 3D display device changes to the second posture or is in the second posture,.

In some embodiments, playing the 3D images from the 3D signals in a first posture playing region defined by the multi-viewpoint 3D display screen in response to a signal that the 3D display device changes to the first posture comprises: switching from playing the 2D images to playing the 3D images in response to a signal that the 3D display device is switched from the second posture to the first posture.

In some embodiments, playing the 2D images from the 3D signals in a second posture playing region defined by the multi-viewpoint 3D display screen in response to a signal that the 3D display device changes to the second posture comprises: switching from playing the 3D images to playing the 2D images in response to a signal that the 3D display device is switched from the first posture to the second posture.

In some embodiments, the 3D signals are 3D videos, such as video frames of the 3D videos.

In some embodiments, the 3D signals comprise a left-eye parallax image and a right-eye parallax image.

In some embodiments, the 3D signals comprise a rendered color image and a DOF image.

In some embodiments, the to-be-played 2D image is selected from one of the left-eye parallax image and the right-eye parallax image.

In some embodiments, the to-be-played 2D image is generated from the rendered color image and the DOF image.

In some embodiments, the method for switching the display of 3D images and 2D images in the 3D display device further comprises: acquiring real-time eye positioning data in response to a signal that the 3D display device is in the first posture.

In some embodiments, playing the 3D images from the 3D signals comprises: rendering the corresponding subpixels of each composite subpixel in the first posture playing region according to the to-be-played 3D image, based on the real-time eye positioning data.

For example, in the case that the 3D display device is in the first posture or switched from the second posture to the first posture, when the real-time eye positioning data indicate that both eyes of the user respectively correspond to one viewpoint of the 3D display device, the corresponding subpixels of one viewpoint, corresponding to each eye of the user, of each composite subpixel in the first posture playing region according to the to-be-played 3D image.

For another example, in the case that the 3D display device is in the first posture or switched from the second posture to the first posture, when the real-time eye positioning data indicate that both eyes of the user respectively correspond to two adjacent viewpoints of the 3D display device, the corresponding subpixels of two viewpoints, corresponding to each eye of the user, of each composite subpixel in the first posture playing region according to the to-be-played 3D image.

In some embodiments, playing the 2D images from the 3D signals comprises: rendering at least one subpixel of each composite subpixel in the second posture playing region according to the to-be-played 2D image.

For example, when the 3D display device is in the second posture or switched from the first posture to the second posture, all the subpixels of the composite subpixels of each composite subpixel are rendered in the second posture playing region according to the to-be-played 2D image.

For another example, when the 3D display device is in the second posture or switched from the first posture to the second posture, one or more subpixels of the composite subpixels of each composite subpixel are rendered in the second posture playing region according to the to-be-played 2D image.

In some embodiments, the method for switching the display of 3D images and 2D images in the 3D display device further comprises: acquiring real-time eye positioning data in response to a signal that the 3D display device is switched from the first posture to the second posture or the 3D display device is in the second posture.

In some embodiments, acquiring real-time eye positioning data in response to a signal that the 3D display device is switched from the first posture to the second posture or the 3D display device is in the second posture comprises: acquiring real-time position of a viewpoint, corresponding to the first posture, at which the eyes are located.

In some embodiments, playing the 2D images from the 3D signals comprises: rendering the corresponding subpixels of each composite subpixel in the second posture playing region according to the to-be-played 2D image, based on the real-time eye positioning data.

For example, in the case that the 3D display device is in the second posture or switched from the first posture to the second posture, when the real-time eye positioning data indicate that both eyes of the user respectively correspond to the same viewpoint in the first posture of the 3D display device, the subpixels, corresponding to the viewpoint, of each composite subpixel in the second posture playing region according to the to-be-played 2D image.

For another example, in the case that the 3D display device is in the second posture or switched from the first posture to the second posture, when the real-time eye positioning data indicate that both eyes of the user respectively correspond to two adjacent viewpoints in the first posture of the 3D display device, the subpixels, corresponding to the two viewpoints, of each composite subpixel in the second posture playing region according to the to-be-played 2D image.

In some embodiments, signals that the 3D display device is in the first posture, is in the second posture, is switched from the first posture to the second posture, and is switched from the second posture to the first posture are acquired by the posture detection apparatus. The posture detection apparatus, for example, is a gravity sensor or a gyro sensor. The posture detection apparatus, for example, is a gravity sensor or a gyro sensor.

In some embodiments, playing the 2D images from the 3D signals further comprises: adjusting the format of the 3D signals, to be suitable for playing the 2D images in the second posture playing region. The adjustment of the format of the 3D signals may be implemented, for example, by a format adjuster.

In some embodiments, the first posture is a transverse direction of the 3D display device; and the second posture is a vertical direction of the 3D display device.

Embodiments of the present disclosure provide a 3D display device 300; and referring to Fig. 9, the 3D display device 300 comprises a processor 320 and a memory 310. In some embodiments, the 3D display device 300 may further comprise a communication interface 340 and a bus 330, wherein the processor 320, the communication interface 340, and the memory 310 communicate with each other through the bus 330. The communication interface 340 may be configured to transmit information. The processor 320 may call logic instructions in the memory 310, to execute the method for switching the display of 3D images and 2D images in the 3D display device of the above embodiment.

In addition, the logic instructions in the memory 310 may be executed in the form of software functional units, and may be stored in a computer-readable storage medium when being sold or used as an independent product.

The memory 310, as a computer-readable storage medium, may be used for storing software programs and computer-executable programs, such as program instructions/modules corresponding to the methods in embodiments of the present disclosure. The processor 320 implements the function application and data processing by running the program instructions/modules stored in the memory 310, i.e., executes the method for switching the display of 3D images and 2D images in the 3D display device in embodiments of the above method.

The memory 310 may comprise a program storage region and a data storage region, wherein the program storage region may store an operating system and application programs required by at least one function; the data storage region may store data created according to the use of a terminal device, and the like. In addition, the memory 310 may comprise a high-speed RAM, and may further comprise an NVM.

The computer-readable storage medium provided by the embodiments of the present disclosure stores the computer-executable instructions; and the computer-executable instructions are configured to execute the method for realizing 3D image display.

The computer program product provided by the embodiments of the present disclosure comprises a computer program stored on the computer-readable storage medium; the computer program comprises program instructions; and when the program instructions are executed by a computer, the computer is allowed to execute the above method for realizing 3D image display.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a RAM, a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. Moreover, the terms used in the present application are used to describe the embodiments only and not to limit the claims. In addition, when used in the present application, the terms "comprise", etc., refer to the presence of at least one of stated features, integers, steps, operations, elements, and/or components, but does not preclude the presence or addition of one or more other features, integers, steps, operations, elements, components and/or groupings of these. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A method for realizing 3D image display, comprising:
detecting a posture change of a 3D display device; and
adjusting a displayed image to a display dimension different from a display dimension before a posture of the 3D display device changes when detecting that a posture of the 3D display device changes, and adjusting a display orientation of a displayed image, so that a display orientation of a displayed image is kept in an initial display orientation before a posture change of the 3D display device.

2. The method according to claim 1, wherein
detecting a posture change of a 3D display device comprises: detecting a rotational angular velocity of the 3D display device, and determining a posture change of the 3D display device according to the rotational angular velocity;
adjusting a display orientation of a displayed image comprises: rotating a display orientation of the image in a plane in which the image is located, so that the image is kept in an initial display orientation before a posture change of the 3D display device.

3. The method according to claim 2, wherein a posture of the 3D display device comprises at least one of: a transverse screen display posture, a vertical screen display posture, and an oblique screen display posture.

4. The method according to claim 3, wherein
a first posture of the 3D display device before a posture change comprises: any one of a transverse screen display posture, a vertical screen display posture, and an oblique screen display posture;
a second posture of the 3D display device after a posture change comprises: any one, different from the first posture, of a transverse screen display posture, a vertical screen display posture, and an oblique screen display posture;
adjusting a display orientation of the displayed image comprises: rotating the image so that the image is kept in an initial display orientation corresponding to the first posture.

5. The method according to claim 4, wherein when any one of the first posture and the second posture is an oblique screen display posture, adjusting a display orientation of a displayed image further comprises:
displaying the image in a full screen display mode.

6. The method according to claim 2, wherein adjusting a display orientation of a displayed image comprises:
rotating a display orientation of the image in a plane in which the image is located, so that the image is kept within an initial display orientation range,
wherein the initial display orientation range comprises the initial display orientation.

7. The method according to any one of claims 1-6, further comprising:
adjusting a display orientation of a displayed image according to a viewing orientation of a user, so that a display orientation of the image coincides with a viewing orientation of the user.

8. The method according to claim 7, wherein
a viewing orientation of the user comprises any one of a transverse viewing orientation, a vertical viewing orientation, and an oblique viewing orientation;
the method further comprises: performing eye positioning for the user, and determining a viewing orientation of the user according to obtained eye positioning data.

9. The method according to any one of claims 1-8, wherein adjusting a display orientation of a displayed image comprises:
rendering subpixels in a multi-viewpoint 3D display screen of the 3D display device based on an adjusted display orientation of an image.

10. The method according to any one of claims 1-8, wherein adjusting a displayed image to a display dimension different from a display dimension before a posture of the 3D display device changes comprises adjusting a displayed image as a 3D image, comprising:
rendering corresponding subpixels of a plurality of composite subpixels in a multi-viewpoint 3D display screen of the 3D display device according to a to-be-played 3D image, in response to a posture change of the 3D display device.

11. The method according to any one of claims 1-8, wherein adjusting a displayed image to a display dimension different from a display dimension before a posture of the 3D display device changes comprises adjusting a displayed image as a 2D image, comprising:
rendering at least one subpixel of each composite subpixel in a multi-viewpoint 3D display screen of the 3D display device according to a to-be-played 2D image, in response to a posture change of the 3D display device.

12. The method according to claim 11, wherein rendering at least one subpixel of each composite subpixel according to a to-be-played 2D image comprises:
rendering corresponding subpixels of each composite subpixel according to a to-be-played 2D image based on eye positioning data.

13. A 3D display device, comprising:
a processor; and
a memory storing program instructions,
wherein the processor is configured to implement the method of any one of claims 1-12 when executing the program instructions.

14. A 3D display device, comprising:
a posture detection apparatus, configured to detect a posture change of the 3D display device; and
a 3D processing apparatus, configured to adjust, based on a detected posture change of the 3D display device, a displayed image to a display dimension different from a display dimension before a posture of the 3D display device changes, and adjust a display orientation of a displayed image, so that a displayed image is kept in an initial display orientation before a posture change of the 3D display device.

15. The 3D display device according to claim 14, wherein
the posture detection apparatus is configured to detect a rotational angular velocity of the 3D display device, and determine a posture change of the 3D display device according to the rotational angular velocity;
the 3D processing apparatus is configured to rotate a display orientation of the image in a plane in which a displayed image is located, so that the image is kept in an initial display orientation before a posture change of the 3D display device.

16. The 3D display device according to claim 15, wherein a posture of the 3D display device comprises at least one of: a transverse screen display posture, a vertical screen display posture, and an oblique screen display posture.

17. The 3D display device according to claim 16, wherein
a first posture of the 3D display device before a posture change comprises: any one of a transverse screen display posture, a vertical screen display posture, and an oblique screen display posture;
a second posture of the 3D display device after a posture change comprises: any one, different from the first posture, of a transverse screen display posture, a vertical screen display posture, and an oblique screen display posture;
the 3D processing apparatus is configured to rotate a displayed image so that the image is kept in an initial display orientation corresponding to the first posture.

18. The 3D display device according to claim 17, wherein the 3D processing apparatus is configured to, when any one of the first posture and the second posture is an oblique screen display posture, display an adjusted image in a full screen display mode.

19. The 3D display device according to claim 15, wherein the 3D processing apparatus is configured to rotate a display orientation of the image in a plane in which a displayed image is located, so that the image is kept within an initial display orientation range;
wherein the initial display orientation range comprises the initial display orientation.

20. The 3D display device according to any one of claims 14-19, wherein the 3D processing apparatus is configured to adjust a display orientation of a displayed image according to a viewing orientation of a user, so that a display orientation of the image coincides with a viewing orientation of the user.

21. The 3D display device according to claim 20, wherein a viewing orientation of the user comprises: any one of a transverse viewing orientation, a vertical viewing orientation, and an oblique viewing orientation;
the 3D display device further comprises an eye positioning apparatus or an eye positioning data interface configured to acquire eye positioning data;
the 3D processing apparatus is configured to determine a viewing orientation of the user according to obtained eye positioning data.

22. The 3D display device according to any one of claims 14-21, wherein the 3D processing apparatus is configured to render subpixels in a multi-viewpoint 3D display screen of the 3D display device based on an adjusted display orientation of an image.

23. The 3D display device according to any one of claims 14-21, wherein the 3D processing apparatus is configured to render corresponding subpixels of a plurality of composite subpixels in a multi-viewpoint 3D display screen of the 3D display device according to a to-be-played 3D image, in response to a posture change of the 3D display device.

24. The 3D display device according to any one of claims 14-21, wherein the 3D processing apparatus is configured to render at least one subpixel of each composite subpixel in a multi-viewpoint 3D display screen of the 3D display device according to a to-be-played 2D image, in response to a posture change of the 3D display device.

25. The 3D display device according to claim 24, wherein the 3D processing apparatus is configured to render corresponding subpixels of each composite subpixel in a multi-viewpoint 3D display screen of the 3D display device according to a to-be-played 2D image, based on eye positioning data.

26. A computer-readable storage medium, storing computer-executable instructions, wherein the computer-executable instructions are configured to execute the method of any one of claims 1-12.

27. A computer program product, comprising computer programs stored on a computer-readable storage medium, wherein the computer programs comprise program instructions, and make a computer execute the method of any one of claims 1-12 when the program instructions are executed by the computer.
